# EUROPEAN PATENT APPLICATION

(11) **EP 2 777 870 A1**
(43) Date of publication of application: **17.09.2014**
(21) Application number: 13159373.3
(22) Date of filing: 15.03.2013
(51) Int. Cl.: B23Q 1/00, B23Q 11/10

(54) **Coolant delivery device for cutting tools**

(71) Applicant: Huang, Hsien-Jen, Taichung City (TW)
(72) Inventor: Huang, Hsien-Jen, Taichung City (TW)
(74) Representative: Jeannet, Olivier

(57) **Abstract**

A coolant delivery device having ball-socket joint structure is provided. A socket (1) has a through hole (12) along its axial direction, which communicates with a ball-shape cavity (13) formed on the upper part of the socket (1). An O-ring (14) for sealing is provided in an annular undercut (131) formed at the bottom of the inner edge of the ball-shape cavity (13), and an O-ring (15) for fixing is assembled at the top end of the ball-shape cavity (13). A sprinkle head (2) has an integral combination of an upper ball base (22) and a lower ball base (21) which is capable of rotational motion around many axes, Thus, the orientation of a nozzle (24) projecting outward from the upper ball base (22) can be adjust at any angle by the rotational motion of the lower ball base (21) in the ball-shape cavity (13), so as to allow coolant ejected out of the nozzle (24) aiming at target zone precisely.

## Description

### BACKGROUND OF THE INVENTION

### 1. Field of the invention

The present invention relates to a coolant delivery device for cutting tools, more particularly to a novel coolant delivery device for cutting tools that enables orientation adjustment of a coolant nozzle at any angle so as to allow the coolant ejected from the nozzle aiming at target zone.

### 2. Descriptions of Related Art

Generally, various cutting tools for metalworking and machining process often set up sprinkle heads for delivering cutting liquids to the interface between cutting tools and workpieces. Lathe is the most important machine among industrial machineries and is widely used in industries, as it not only has a variety of cutting functions but also is adaptable to the processing for a variety of different materials. Accompanying with the uninterrupted improvement of the lathe, the production of products has become increasingly sophisticated. Tools used in lathes are often called lathe tools which are usually set up on tool holders, and the tools are forced to contact with workpieces when lathes are in operation. Lathe tools can be readily exchanged for maintenance and production purpose.

Metal cutting operations done by ordinary lathes often generate heat due to the friction between tools and workpieces at high revolving speed. In order to protect cutting tools from wearing and workpieces from deforming due to overheating, sprinkle heads are often used to deliver cutting fluids to the interface between the tools and the workpieces.

The conventional sprinkle heads for delivering coolant can achieve predetermined effect of delivering cooling fluids to the interface between the tools and the workpieces; however it is found in implementation that there is limitation on the spraying angle of coolant delivered from the sprinkle heads. This causes great inconvenience during operation. Therefore, there are still rooms for further improvement in its overall implementation.

In view of the above reasons, the inventor of the present invention proposes a coolant delivering device for cutting tools based on his abundant experience in product development and manufacturing in relevant field for many years and according to the improvement done on conventional structure, so as to achieve the purpose of better implementation value.

### SUMMARY OF THE INVENTION

The main object of the present invention is to provide a coolant delivery device for cutting tools, in which the orientation angle of a nozzle on the sprinkle head can be adjusted at any angle by the rotational motion of a lower ball base in a ball-shape cavity of a socket so as to enable the coolant ejected from the nozzle aiming at target zone.

The object and the effect of the coolant delivery device for cutting tools of the present invention can be achieved by the following specific technical means.

A coolant delivery device for cutting tools of the present invention comprises a socket and a sprinkle head, in which:
the socket has a thread section provided at its bottom; the socket has a through hole along the axial direction, which communicates with a ball-shape cavity formed on the upper part of the socket: an O-ring for sealing is provided in an annular undercut formed at the bottom of the inner edge of the ball-shape cavity, and an O-ring for fixing is assembled at the top end of the ball-shape cavity;
the sprinkle head has an integral combination of an upper ball base and an lower ball base, the lower ball base being rested in the ball-shape cavity of the socket; a conduit corresponding to and in communication with the through hole of the socket is formed within the upper ball base and the lower ball base, a nozzle communicating with the conduit is provided to project outwardly from the upper ball base.

According to a preferred embodiment of the coolant delivery device of the present invention, the conduit of the sprinkle head is connected to the nozzle with an angle of 10 to 90 degrees.

According to a preferred embodiment of the coolant delivery device of the present invention, a joint section is provided at the portion above the thread section on the lower portion of the socket.

### BRIEF DESCRIPTION OF THE DRAWINGS

Figure 1 is a schematic perspective exploded view showing the structure of the present invention;
Figure 2 is a schematic perspective assembled view showing the structure of the present invention;
Figure 3 is a schematic sectional assembled view showing the structure of the present invention;
Figure 4 is a schematic sectional assembled view showing the structure of another embodiment of the present invention;
Figure 5 is a schematic sectional view showing the state of implementation of the present invention;
Figure 6 is a schematic view showing the present invention in assembled state for implementation;
Figure 7 is a schematic sectional assembled view showing the structure of yet another embodiment of the present invention.

### DETAILED DESCRIPTION OF THE PREFERRED EMBODIMENT

The technical contents, objects and effects of the present invention will become more apparent by the detailed description of a preferred embodiment of the present invention in conjunction with accompanying drawings.

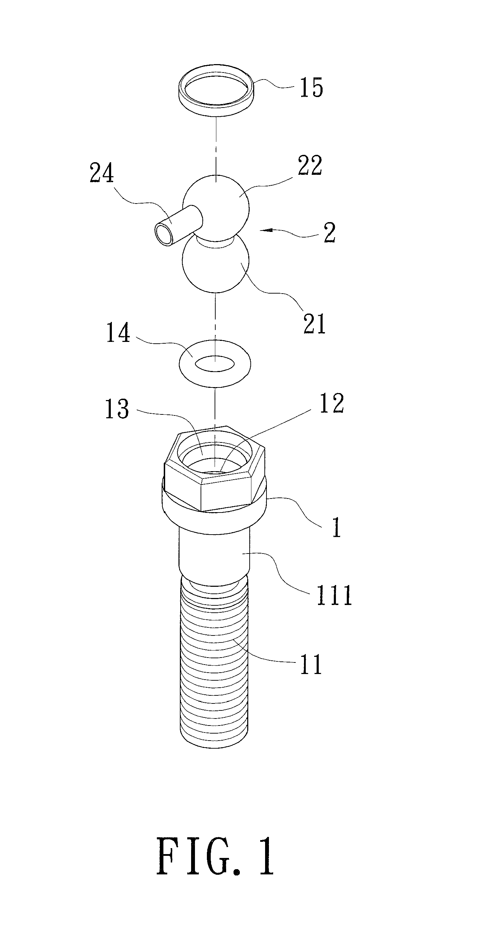

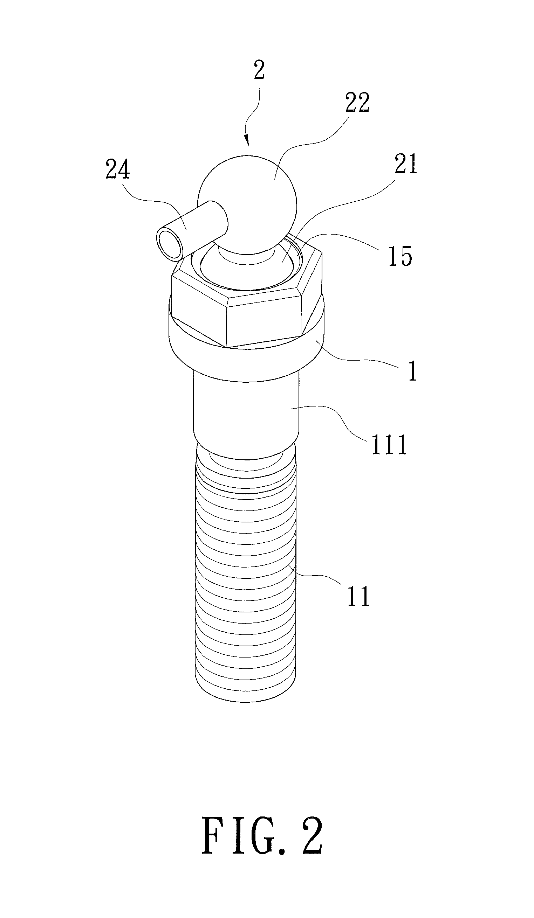

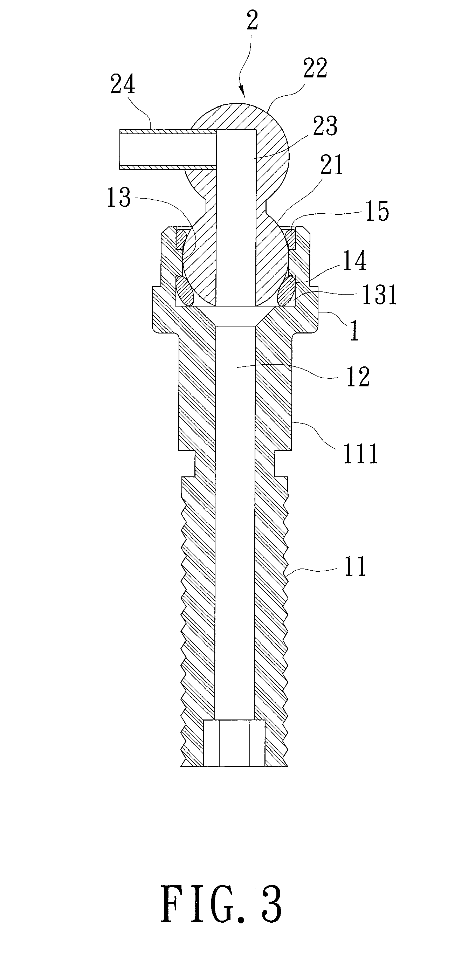

Figure 1 is a schematic perspective exploded view showing the structure of the present invention; Figure 2 is a schematic perspective assembled view showing the structure of the present invention; and Figure 3 is a schematic sectional assembled view showing the structure of the present invention. As shown in the figures, the coolant delivery device for cutting tools of the present invention comprises a socket (1) and a sprinkle head (2).

The socket (1) has a thread section (11) provided at its bottom for threading engagement and thus fixing at a predetermined position. The socket (1) has a through hole (12) along its axial direction, which communicates with a ball-shape cavity (13) formed on the upper part of the socket (1). An O-ring (14) for sealing is provided in an annular undercut (131) formed at the bottom of the inner edge of the ball-shape cavity (13), and an O-ring (15) for fixing is assembled at the top end of the ball-shape cavity (13).

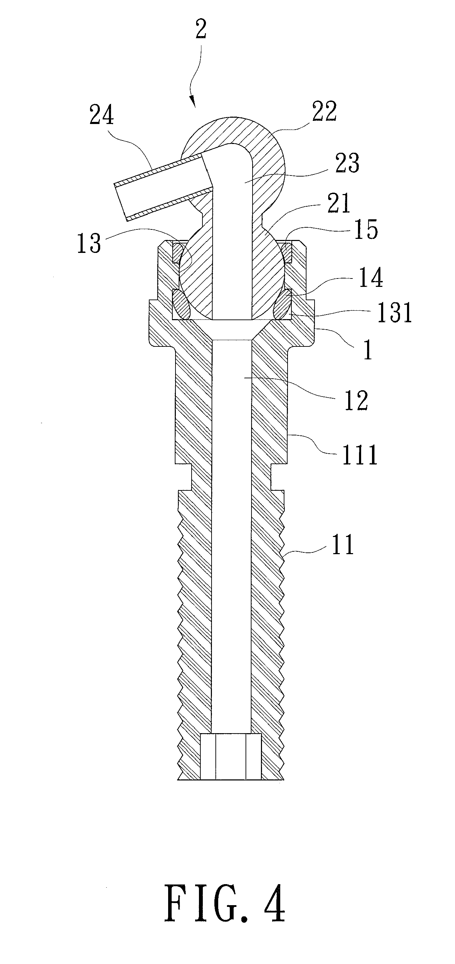

The sprinkle head (2) has an integral combination of an upper ball base (22) and a lower ball base (21), the lower ball base (21) being rested in the ball-shape cavity (13) of the socket (1). A conduit (23) corresponding to and in communication with the through hole (12) of the socket (1) is formed within the upper ball base (22) and the lower ball base (21), and a nozzle (24) communicating with the conduit (23) is provided to project outwardly from the upper ball base (22). Further, the conduit (23) of the sprinkle head (2) is connected to the nozzle (24) with an angle of 10 to 90 degrees, as shown in Figure 4.

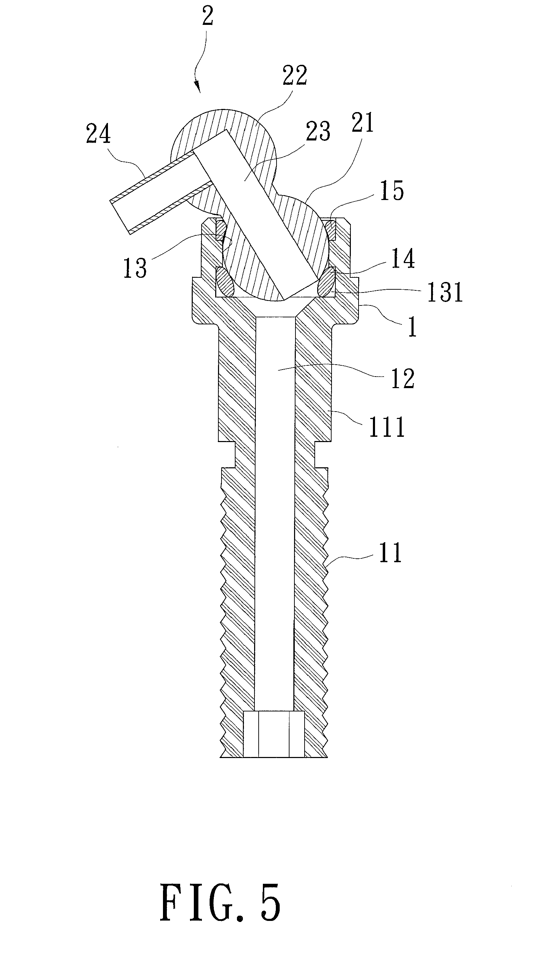

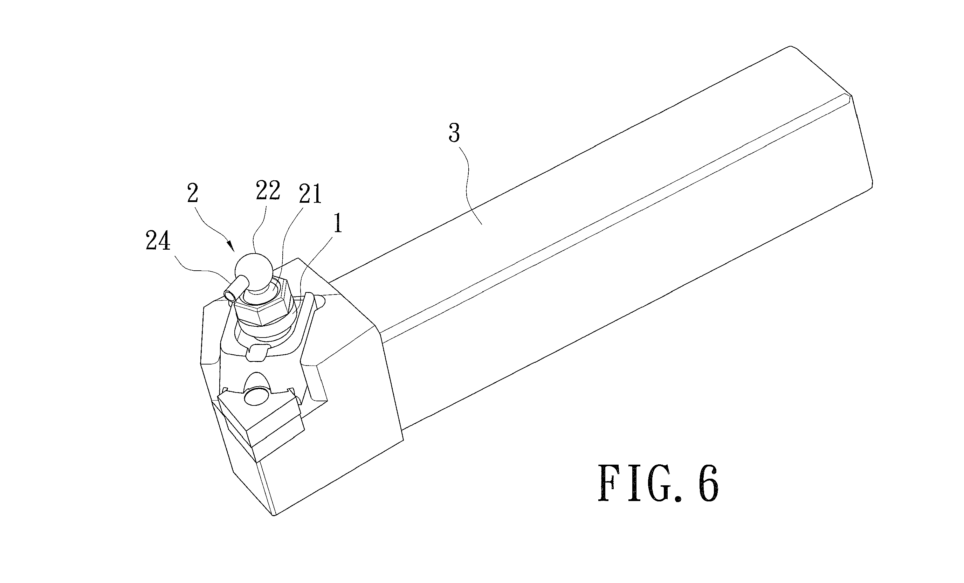

The implementation of the present invention will be described by referring to Figure 5, a schematic sectional view showing the state of implementation of the present invention. After the O-ring (14) for sealing is disposed in the annular undercut (131) formed in the ball-shape cavity (13) of the socket (1), the lower ball base (21) of the sprinkle head (2) is correspondingly fitted in the ball-shape cavity (13). Then, the O-ring (14) for fixing is assembled at the top end of the ball-shape cavity (13) so as to limit the lower ball base (21) within the ball-shape cavity (13) undetacheably. In this manner, the coolant delivery device for cutting tools of the present invention can be installed on the tool holder to cooperate with the cutting tool. Figure 6 is a schematic view showing the present invention in assembled state for implementation. Referring to this figure, the thread section (11) of the socket (1) is threaded onto a proper position on the tool holder (3) so as to fix the socket (1) firmly on the tool holder (3). The lower ball base (21) of the sprinkle head (2) is rotated in the ball-shape cavity (13) to adjust its angle so that the nozzle (24) of the sprinkle head (2) can aim at the interface between the tool and the workpiece. When in operation, the cooling fluid passing the through hole (12) through the conduit (23) of the sprinkle head (2) to the nozzle (24) is ejected to the interface between the tool and the workpiece. As the sprinkle head (2) is an integral combination of the upper ball base (22) and the lower ball base (21), the angular orientation of the nozzle (24) can be adjusted at any angle by the motion of the lower ball base (21) in the ball-shape cavity (13). Furthermore, the conduit (23) of the sprinkle head (2) is connected to the nozzle (24) with an angle of 10 to 90 degrees, so that the cooling fluid can be more precisely sprayed to the interface between the cutting tip of the tool and the workpiece by the nozzle (24) of the sprinkle head (2). The coolant delivery device is adaptable to be used in various types of cutting tool, with better cooling effect and prolonged lifetime of the cutting tools.

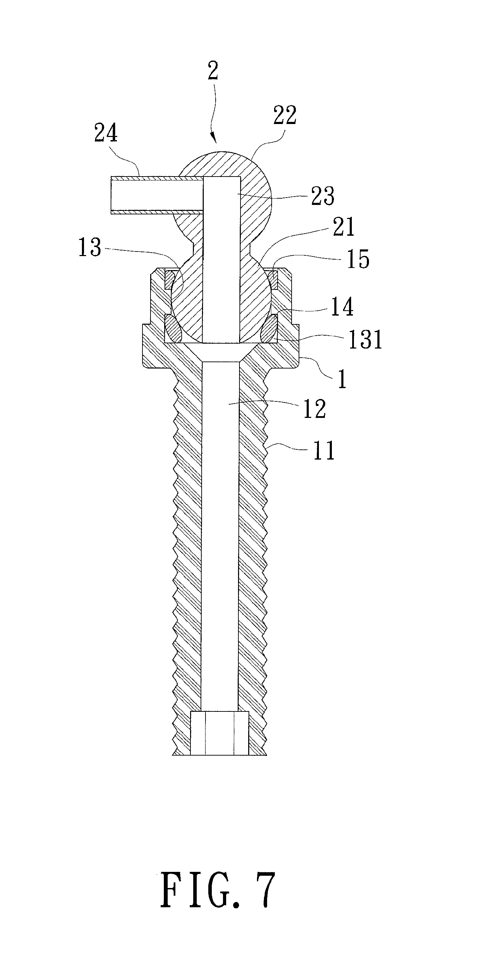

Moreover, the thread section (11) at the bottom of the socket (1) according to the present invention can be fitted in different thread connection place. Thus, a joint section (111) is provided at the portion above the thread section (11) for this purpose. Alternatively, as shown in Figure 7, the thread section (11) can be an integral design which is more suitable for this purpose.

Based on the abovementioned description of the structural constitution and implementation of the present invention, the angular orientation of the nozzle can be adjusted at any angle by the motion, for example 360 degrees in front to back direction and 35∼180 degrees in up to down direction, of the lower ball base in the ball-shape cavity. Furthermore, the coolant delivery device is adaptable to be used in various types of cutting tool, for example triangular type, diamond type, circular type, so that the cooling fluid can be more precisely sprayed to the interface between the cutting tip of the tool and the workpiece through the nozzle of the sprinkle head.

The above description of embodiment of the present invention is only for illustrative purpose, not for limitation. Variations and modifications made without departing from the spirit and the scope of the present invention are still considered to be within the scope of the present invention.

## Claims

1. A coolant delivery device for cutting tools, comprising a socket (1) and a sprinkle head (2), wherein:
said socket (1) has a thread section (11) provided at its bottom; said socket (1) has a through hole (12) along its axial direction, which communicates with a ball-shape cavity (13) formed on the upper part of said socket (1), an O-ring (14) for sealing is provided in an annular undercut (131) formed at the bottom of the inner edge of said ball-shape cavity (13), and an O-ring (15) for fixing is assembled at the top end of said ball-shape cavity (13);
said sprinkle head (2) has an integral combination of an upper ball base (22) and an lower ball base (21), said lower ball base (21) being rested in said ball-shape cavity (13) of said socket (1); a conduit (23) corresponding to and in communication with said through hole (12) of said socket (1) is formed within said upper ball base (22) and said lower ball base (21), a nozzle (24) communicating with said conduit (23) is provided to project outwardly from said upper ball base (22).

2. The coolant delivery device for cutting tools as claimed in claim 1, wherein said conduit (23) of said sprinkle head (2) is connected to said nozzle (24) with an angle of 10 to 90 degrees.

3. The coolant delivery device for cutting tools as claimed in claim 1, wherein a joint section (111) is provided at the portion above said thread section (11) on the lower portion of said socket (1).
